# EUROPÄISCHE PATENTANMELDUNG

(11) **EP 2 202 046 A1**
(43) Veröffentlichungstag der Anmeldung: **30.06.2010**
(21) Anmeldenummer: 08022486.8
(22) Anmeldetag: 29.12.2008
(51) Int. Cl.: B29C 47/04, B29C 47/56, B29C 47/70, B29C 47/06

(54) **Verfahren, Extrusionskopf und Vorrichtung für die Herstellung eines schlauchförmigen Formlings aus extrudierbarem Kunststoff**

(71) Anmelder: W. Müller GmbH, 53842 Troisdorf (DE)
(72) Erfinder: Die Erfindernennung liegt noch nicht vor
(74) Vertreter: Müller, Thomas Michael

(57) **Zusammenfassung**

Die Erfindung betrifft ein Verfahren für die Herstellung eines schlauchförmigen Formlings aus extrudierbarem Kunststoff bei dem mindestens zwei Materialströme von verschiedenen Extrudern jeweils mindestens einem Verteilerkanal 37, 44 in einem gemeinsamen ringförmigen Strömungsraum 6, 7 eines Extrusionskopfes zugeführt werden, wobei die Materialströme über die Verteilerkanäle 37, 44 zu einem Hohlstrang geformt werden.

## Beschreibung

Die Erfindung betrifft ein Verfahren, ein Extrusionskopf sowie eine Vorrichtung für die Herstellung eines schlauchförmigen Formlings aus extrudierbarem Kunststoff sowie ein Behältnis.

Aus der DE 43 930 671 C2 ist ein Verfahren und eine Vorrichtung bekannt, wobei zwei koaxial zueinander angeordnete ringförmige Strömungsräume vorgesehen sind, in denen ein Materialstrom zu Hohlsträngen geformt wird. Die koaxial zueinander verlaufenden Hohlstränge werden zu einem zweischichtigen schlauchförmigen Formling zusammengeführt. Beide Strömungsräume sind mit einem Anschlusskanal verbunden, der mit einem Extruder verbindbar ist. Die Strömungsräume sind durch zwei Verteilerhülsen und ein Gehäuse des Extrusionskopfs gebildet. Die beiden Verteilerhülsen sind koaxial umeinander angeordnet und bilden zwischen sich einen ersten Strömungsraum. Die beiden Verteilerhülsen sind wiederum in dem Gehäuse aufgenommen, wobei zwischen der äußeren Verteilerhülse und dem Gehäuse ein zweiter Strömungsraum gebildet ist. In Außenflächen der Verteilerhülsen sind Kanäle eingearbeitet, die sich jeweils über ein Teil des Umfangs der jeweiligen Verteilerhülse erstrecken und für eine gleichmäßige Verteilung der Materialströme über den Umfang der Strömungsräume sorgen.

Aus der DE 10 2006 034 318 A1 ist eine Verpackung in Form einer Flasche bekannt, die aus einem schlauchförmigen extrudierten Vorformling gefertigt ist und in Radialrichtung aus mehreren Schichten besteht, wobei die Schichtdicken der einzelnen Schichten über die Höhe der Flasche variieren. Die Schichten sind zudem aus unterschiedlichen Materialien gefertigt, die unterschiedliche sensorische Eigenschaften aufweisen.

Aufgabe der vorliegenden Erfindung ist es, ein Verfahren, einen Extrusionskopf und eine Vorrichtung zur Herstellung eines schlauchförmigen Formlings bereitzustellen, wobei der Formling oder ein daraus gefertigtes Behältnis über seinen Umfang unterschiedlichen Eigenschaften aufweist.

Die Aufgabe wird durch ein Verfahren für die Herstellung eines schlauchförmigen Formlings aus extrudierbarem Kunststoff gelöst, bei dem mindestens zwei Materialströme von verschiedenen Extrudern jeweils mindestens einem Verteilerkanal in einem gemeinsamen ringförmigen Strömungsraum eines Extrusionskopfes zugeführt werden, wobei die Materialströme über die Verteilerkanäle zu einem Hohlstrang geformt werden.

Somit werden einem einzigen Strömungsraum mindestens zwei unterschiedliche Materialströme zugeführt und in dem Strömungsraum zu einem gemeinsamen Hohlstrang geformt. Danach lässt sich ein Hohlstrang fertigen, der über seinen Umfang aus unterschiedlichen Materialströmen hergestellt ist, wobei insbesondere dann, wenn die Materialströme aus unterschiedlichen Kunststoffen bestehen, ein Hohlstrang mit über seinen Umfang unterschiedlichen Eigenschafen herstellbar ist. So können beispielsweise Materialströme aus unterschiedlich eingefärbten Kunststoffen dem Strömungsraum zugeführt werden. Denkbar ist auch, dass Kunststoffe mit unterschiedlichen physikalischen Eigenschaften eingesetzt werden. Grundsätzlich lassen sich somit Hohlstränge mit über den Umfang in unterschiedlichster Weise verschieden gearteten Streifen herstellen wie zum Beispiel unterschiedlichen visuellen oder haptisch Eigenschaften.

Vorzugsweise ist vorgesehen, dass die Materialströme durch die Verteilerkanäle jeweils über einen Teil des Umfangs des Strömungsraums verteilt werden, um einen mit über seinem Umfang aus wechselnden Materialsträngen gebildeten Hohlstrang zu bilden.

Dadurch, dass die Verteilerkanäle jeweils über einen Teil des Umfangs verlaufen, wird eine gleichmäßige Verteilung der Materialströme gewährleistet. Hierbei entsteht ein Hohlstrang, der streifenförmig aus Kunststoffen unterschiedlicher Materialströme besteht, wobei sich die Streifen in etwa genausoweit über den Umfang erstrecken, wie der zugehörige Verteilerkanal.

Die Verteilerkanäle können in Form von Vertiefungen in einer Außenfläche eines gemeinsamen Verteilers angeordnet sein, wobei die Außenfläche den ringförmigen Strömungsraum nach innen begrenzt. Um auch Formlinge herstellen zu können, die nicht nur über den Umfang aus Kunststoffen unterschiedlicher Materialströme bestehen sondern auch mehrschichtig aufgebaut sind, wobei jede einzelne Schicht wiederum über dem Umfang aus Kunststoffen verschiedener Materialströme besteht und wobei die Schichten koaxial zueinander angeordnet sind, kann vorgesehen sein, dass mindestens zwei weitere Materialströme von verschiedenen Extrudern jeweils mindestens einem Verteilerkanal in einem gemeinsamen weiteren ringförmigen Strömungsraum des Extrusionskopfes zugeführt werden, wobei die Materialströme über die Verteilerkanäle zu einem weiteren Hohlstrang geformt werden.

Hierzu sind die beiden Strömungsräume vorzugsweise koaxial zueinander angeordnet, wobei die Hohlstränge zu einem gemeinsamen mehrschichtigen Formling zusammengefügt werden.

Die Aufgabe wird ferner durch einen Extrusionskopf für die Herstellung eines schlauchförmigen Formlings aus extrudierbarem Material gelöst, der ein Gehäuse, in dem mindestens ein Strömungsraum zum Ausbilden eines Hohlstrangs aus extrudierbarem Kunststoff vorgesehen ist, sowie je Strömungsraum mindestens zwei Verteilerkanäle, die mit unterschiedlichen Anschlusskanälen verbunden sind, wobei die Anschlusskanäle jeweils mit einem separaten Extruder verbindbar sind, umfasst.

Vorzugsweise ist je Strömungsraum ein Verteiler vorgesehen, der eine Außenfläche aufweist, die eine innere Begrenzung des Strömungsraums darstellt, wobei die Verteilerkanäle in Form von Vertiefungen in der Außenfläche ausgebildet sind.

Die Verteilerkanäle verlaufen vorzugsweise jeweils über ein Teil des Umfangs des Strömungsraums. Um eine gleichmäßige Verteilung über den gesamten Umfang des Strömungsraums zu gewährleisten, sind über den gesamten Umfang des Strömungsraums Verteilerkanäle vorzusehen.

Jeweils zwei der Verteilerkanäle können in Strömungsrichtung betrachtet an ihren Enden ineinander übergehen, um eine möglichst homogene Verbindung der Materialströme der beiden Verteilerkanäle zu gewährleisten.

Um mehrschichtige Formlinge herstellen zu können, sind zwei koaxial zueinander angeordnete Strömungsräume vorzusehen. Grundsätzlich können auch mehr Strömungsräume umeinander angeordnet werden. Je Schicht ist ein Strömungsraum vorzusehen.

Hierbei sind die Verteiler der Strömungsräume koaxial zueinander angeordnet. Hierzu sind die Verteiler vorzugsweise hülsenförmig gestaltet und ineinander geschachtelt.

Ferner wird die Aufgabe durch eine Vorrichtung für die Herstellung eines Schlauchförmigen Formlings aus extrudierbarem Kunststoff mit einem Extrusionskopf wie oben beschrieben gelöst, wobei mit jedem Anschlusskanal ein separater Extruder verbunden sein kann.

Die Aufgabe wird darüber hinaus durch ein Behältnis mit einer Wand gelöst, welche ausgehend von einem extrudierten schlauchförmigen Formling aus Kunststoff gefertigt ist, wobei die Wand über den Umfang unterschiedliche Materialsträngen aus unterschiedlichem Kunststoffen aufweist.

Somit lassen sich Behälter, insbesondere Flaschen, herstellen, die in Umfangsrichtung betrachtet unterschiedliche Materialsträngen oder Materialstreifen mit unterschiedlichen Eigenschaften aufweisen. Insbesondere können Materialstreifen mit unterschiedlichen optischen oder haptischen Eigenschaften gewählt werden. Somit können z.B. Flaschen mit Längsstreifen unterschiedlicher Farbe, auch mit transparenten Materialstreifen, gefertigt werden. Ebenso können Flaschen gefertigt werden, die im Bereich von Griffmulden aus rutschfestem Kunststoff und im übrigen Bereich aus einem anderen optisch ansprechendem oder besonders gut bedruckbaren Kunststoff gefertigt sind.

Ein bevorzugtes Ausführungsbeispiel eines erfindungsgemäßen Extrusionskopfes und eines damit gefertigten Behältnisses werden im folgenden anhand der Zeichnungen näher erläutert. Hierin zeigt
- Figur 1: einen Längsschnitt eines erfindungsgemäßen Extrusionskopfes;
- Figur 2: einen Querschnitt des Extrusionskopfes entlang der Schnittlinie II-II ge- mäß Figur 1;
- Figur 3: einen Teillängsschnitt zweier Verteilerdorne;
- Figur 4: einen Teillängsschnitt des inneren Verteilerdorns;

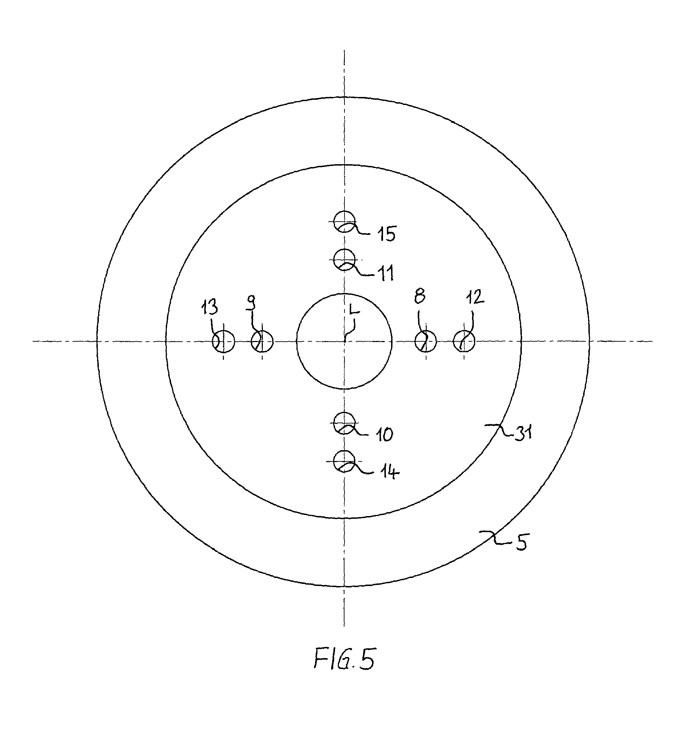

- Figur 5: einen Querschnitt des Extrusionskopfes entlang der Schnittlinie V-V ge- mäß Figur 1;
- Figur 6: eine Seitenansicht eines erfindungsgemäßen Behältnisses;
- Figur 7: einen Querschnitt des Behältnisses entlang der Schnittlinie VII-VII gemäß Figur 7.

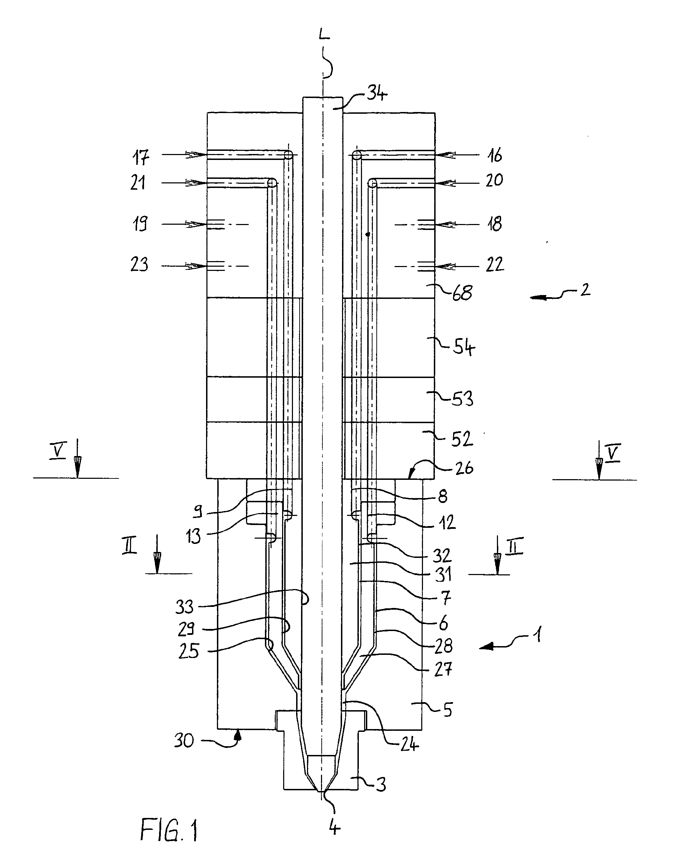

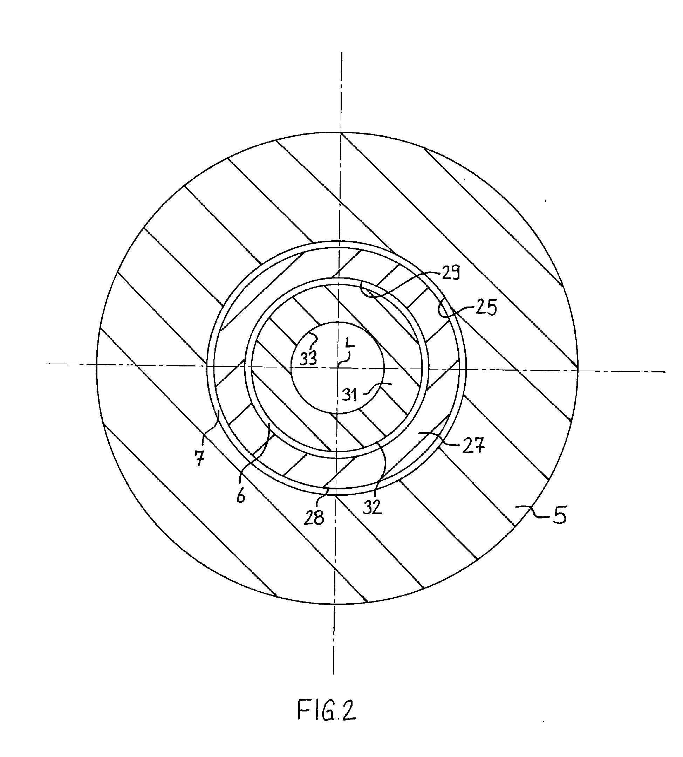

Figur 1 zeigt einen Extrusionskopf mit einem Düsenabschnitt 1 und einem Anschlussabschnitt 2. Der Düsenabschnitt 1 ist mit einer Düse 3 versehen, in der eine Öffnung 4 vorgesehen ist, durch die der fertig geformte schlauchförmige Formling austritt. Ferner weist der Düsenabschnitt 1 ein Gehäuse 5 auf, in dem ein erster äußerer Strömungsraum 6 und ein zweiter innerer Strömungsraum 7 gebildet sind. Die beiden Strömungsräume 6, 7 sind ringförmig gestaltet und koaxial umeinander angeordnet, wie dies insbesondere aus Figur 2 hervorgeht. Die beiden Strömungsräume 6, 7 münden in einen Austrittsströmungsraum 24, der zur Düse 3 und zur Öffnung 4 führt.

Die Strömungsräume 6, 7 sind entgegengesetzt von der Düse 3 mit Zuführkanälen 8 bis 15 verbunden, wobei die Strömungsräume 6, 7 jeweils mit vier der Zuführkanälen 8 bis 15 verbunden sind. Die Zuführkanäle 8 bis 15 verlaufen bis in den Anschlussabschnitt 2 des Extrusionskopfes hinein und sind dort mit Anschlußkanälen 16 bis 23 verbunden, an welche jeweils ein Extruder angeschlossen werden kann. Hierbei münden die Zuführkanäle 8, 9, 10, 11 des inneren Strömungsraums 7 in jeweils einen Anschlusskanal 16, 17, 18, 19. Die Zuführkanäle 12, 13, 14, 15 des äußeren Strömungsraums 6 münden jeweils in einen Anschlusskanal 20, 21, 22, 23. Somit kann extrudierbarer Kunststoff aus verschiedenen Extrudern durch die Anschlusskanäle 16 bis 23 und durch die Zuführkanäle 8 bis 15 in die beiden Strömungsräume 6, 7 geführt werden, um dort einen Schlauch mit Kunststoffmaterial aus unterschiedlichen Extrudern zu bilden. Im vorliegenden Fall wird ein zweischichtiger Schlauch gebildet mit einem inneren Hohlstrang, der im inneren Strömungsraum 7 gebildet wird, und einem äußeren Hohlstrang, der im äußeren Strömungsraum 6 gebildet wird, wobei im Austrittsströmungsraum 24 beide Hohlstränge zu einem einzigen schlauchförmigen Formling zusammengeführt werden.

Das Gehäuse 5 des Extrusionskopfes weist eine Aufnahme 25 auf, die von einer dem Anschlußabschnitt 2 zugewandten oberen Seite 26 ausgeht und bis zu einer der Düse 3 zugewandten unteren Seite 30 verläuft. Die Aufnahme 25 bildet die äußere Begrenzung des äußeren Strömungsraums 6. In die Aufnahme 25 ist ein erster äußerer Verteilerdorn 27 eingesetzt, der zusammen mit der Aufnahme 25 einen Ringspalt bildet, der den ersten äußeren Strömungsraum 6 darstellt. Der äußere Verteilerdorn 27 weist eine Außenfläche 28 auf, welche die innere Begrenzung des äußeren Strömungsraums 6 darstellt.

Der äußere Verteilerdorn 27 weist wiederum eine Aufnahme 29 auf, die ebenfalls von der oberen Seite 26 bis zur unteren Seite 30 verläuft und in der ein zweiter innerer Verteilerdorn 31 sitzt. Der zweite innere Verteilerdorn 31 bildet mit der Aufnahme 29 einen Ringspalt, der den inneren Strömungsraum 7 darstellt. Die Aufnahme 29 des äußeren Verteilerdorns 27 ist hierbei die äußere Begrenzung des inneren Strömungsraums 7 und eine Außenfläche 32 des inneren Verteilerdorns 31 bildet die innere Begrenzung des inneren Strömungsraums 7.

In dem inneren Verteilerdorn 31 ist eine Bohrung 33 vorgesehen, die ebenfalls von der oberen Seite 26 bis zur unteren Seite 30 des inneren Verteilerdorns 31 führt und durch die eine Stange 34 hindurchgeführt ist, welche zur Einstellung der Schlitzbreite der Öffnung 4 der Düse 3 dient.

Der äußere Verteilerdorn 27 weist an der oberen Seite 26 einen Flansch 40 auf, mit dem sich der äußere Verteilerdorn 27 in Richtung zur Düse 3 gegen eine in der Aufnahme 25 des Gehäuses 5 gebildeten Schulter 42 axial abstützt. Der innere Verteilerdorn 31 weist ebenfalls an seiner oberen Seite 26 einen Flansch 41 auf, der axial in Richtung zur Düse 3 gegen den Flansch 40 des äußeren Verteilerdorns 27 abgestützt ist und gegen den sich der Anschlußabschnitt 2 des Extrusionskopfs abstützt.

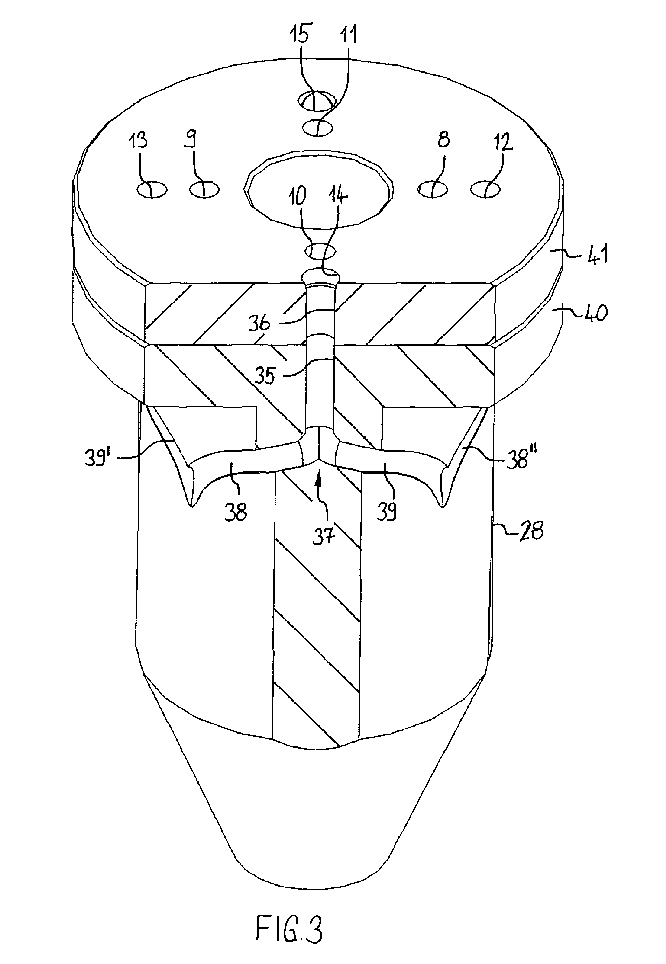

Figur 3 zeigt die beiden Verteilerdorne 27, 31 in einem Teil-Längsschnitt. Der Schnitt verläuft durch einen der Zuführkanäle 14, wobei zu erkennen ist, dass der Zuführkanal 14 durch eine Bohrung 35 parallel zur Längsachse L im äußeren Verteilerdorn 27 und eine zur Bohrung 35 koaxialen Bohrung 36, die im Flansch 41 des inneren Verteilerdorns 31 angeordnet ist, gebildet ist. Der Zuführkanal 14 mündet in einen Verteilerkanal 37. Insgesamt sind pro Strömungsraum 6, 7 vier Verteilerkanäle vorgesehen. Es sind aber auch mehr als vier Verteilerkanäle pro Strömungsraum denkbar. Für den äußeren Strömungsraum 6 wird einer der Verteilungskanäle exemplarisch für alle weiteren im folgenden näher erläutert.

Der Verteilerkanal 37 ist in die Außenfläche 28 des äußeren Verteilerdorns 27 in Form einer Nut eingearbeitet. Der Verteilerkanal 37 ist in einen ersten Verteilerast 38 und einen zweiten Verteilerast 39 aufgeteilt, die sich ausgehend vom Zuführkanal 14 in Form einer sogenannten Herzkurve aufgabeln. Ausgehend vom Zuführkanal 14 verlaufen die beiden Verteileräste 38, 39 in unterschiedliche Richtungen bezogen auf den Umfang und verlaufen jeweils teilweise über den Umfang. Im vorliegenden Fall überdeckt der Verteilerkanal 37 mit seinen beiden Verteilerästen 38, 39 ein Viertel des Umfangs des äußeren Verteilerdorns 27. Stromabwärts, also in Richtung zur unteren Seite 30, münden die Verteileräste 38, 39 jeweils in einen Verteilerast 38", 39' eines benachbarten Verteilerkanals. Somit verlaufen um den gesamten Umfang des äußeren Verteilerdorns 27 Verteilerkanäle 37, so dass die Materialströme aus extrudierbarem Kunststoff gleichmäßig über den Umfang der Außenfläche 28 des äußeren Verteilerdorns 27 verteilt werden, um eine gleichmäßigen Hohlstrang zu formen.

Ähnlich sind die anderen über den Umfang verteilten Verteilerkanäle aufgebaut und mit den entsprechenden Zuführkanälen 12, 13, 15 verbunden.

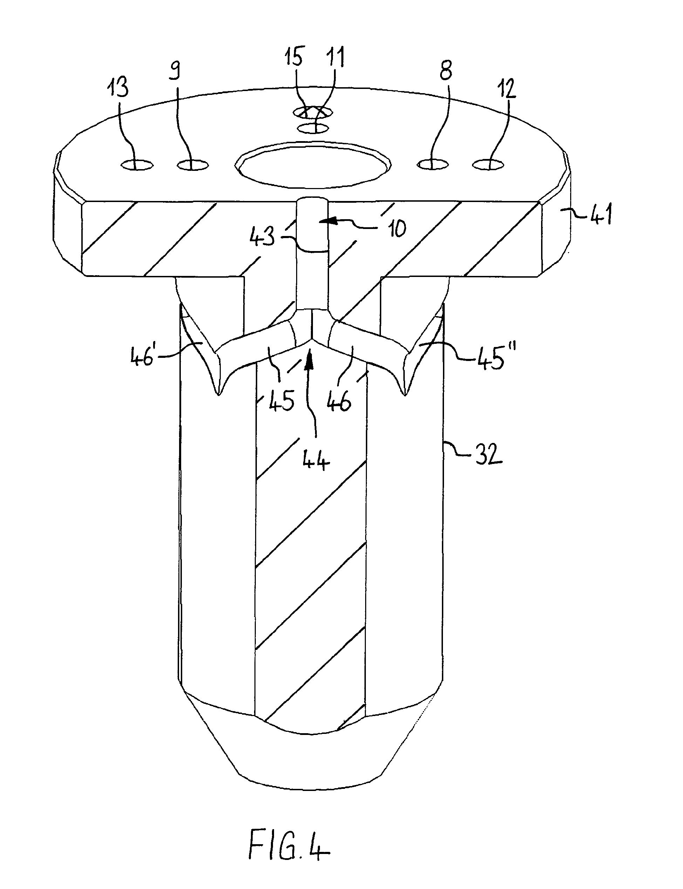

Figur 4 zeigt den inneren Verteilerdorn 31 im Teilschnitt, wobei die Schnittfläche durch einen der Zuführkanäle 10 verläuft. Der Zuführkanal 10 ist durch eine Bohrung 43 im inneren Verteilerdorn 31 gebildet, welche parallel zur Längsachse L verläuft. Die Bohrung 43 mündet in einen Verteilerkanal 44, welcher in Form einer Nut in der Außenfläche 32 des inneren Verteilerkanals 31 gebildet ist. Der Verteilerkanal 44 im inneren Verteilerdorn 31 ist vergleichbar zum bereits beschriebenen Verteilerkanal 37 des äußeren Verteilerdorns 27 gestaltet und weist somit ebenfalls die Form einer Herzkurve auf. Der Verteilerkanal 44 weist einen ersten Verteilerast 45 und einen zweiten Verteilerast 46 auf, die in unterschiedliche Richtung bezogen auf den Umfang der Außenfläche 32 verlaufen. Ferner mündet jeder Verteilerast 45, 46 in einen Verteilerast 45", 46' eines benachbarten Verteilerkanals.

Die Zuführkanäle 8, 9, 10, 11, 12, 13, 14, 15, sind durch Bohrungen und Nuten in Verteilerplatten 52, 53, 54, 68 gebildet und führen zu den entsprechenden Anschlusskanälen 16, 17, 18, 19, 20, 21, 22, 23. Hierbei ist jeweils einer der Zuführkanäle 8 bis 15 mit einem der Anschlusskanäle 16 bis 23 verbunden.

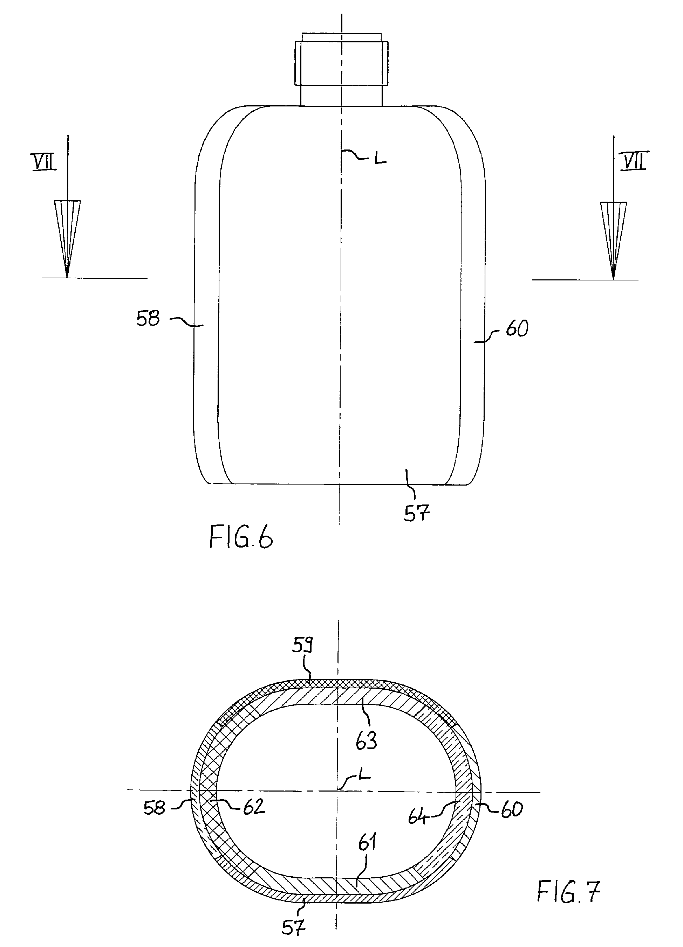

Die Figuren 6 und 7 zeigen jeweils unterschiedliche Ansichten eines erfindungsgemäßen Behältnisses in Form einer Flasche und werden im folgenden zusammen beschrieben.

Das Behältnis weist eine Wand 65 aus zwei Schichten auf. Eine äußere Schicht 66 und eine innere Schicht 67 sind durch Koextrusion mit einem Extrusionskopf wie oben beschrieben hergestellt. Die äußere Schicht 65 besteht aus vier Materialsträngen 57, 58, 59, 60, die sich entlang der Längsachse L erstrecken und über den Umfang abwechseln. Die Materialstränge 57, 58, 59, 60 können jeweils aus unterschiedlichen Kunststoffmaterialien gefertigt sein. Diese können unterschiedliche Eigenschaften z.B. haptische oder optische Eigenschaften aufweisen.

Die innere Schicht 67 weist ebenso vier über den Umfang verteilt angeordnete Materialstränge 61, 62, 63, 64 auf, die auch jeweils aus einem anderen Kunststoffmaterial gefertigt sein können, wie zu den Materialsträngen der äußeren Schicht 66 beschrieben.

### Bezugszeichenliste

- 1: Düsenabschnitt
- 2: Anschlussabschnitt
- 3: Düse
- 4: Öffnung
- 5: Gehäuse
- 6: erster äußerer Strömungsraum
- 7: zweiter innerer Strömungsraum
- 8: Zuführkanal
- 9: Zuführkanal
- 10: Zuführkanal
- 11: Zuführkanal
- 12: Zuführkanal
- 13: Zuführkanal
- 14: Zuführkanal
- 15: Zuführkanal
- 16: Anschlusskanal
- 17: Anschlusskanal
- 18: Anschlusskanal
- 19: Anschlusskanal
- 20: Anschlusskanal
- 21: Anschlusskanal
- 22: Anschlusskanal
- 23: Anschlusskanal
- 24: Austrittsströmungsraum
- 25: Aufnahme
- 26: obere Seite
- 27: erster äußerer Verteilerdorn
- 28: Außenfläche
- 29: Aufnahme
- 30: untere Seite
- 31: zweiter innerer Verteilerdorn
- 32: Außenfläche
- 33: Bohrung
- 34: Stange
- 35: Bohrung
- 36: Bohrung
- 37: Verteilerkanal
- 38: erster Verteilerast
- 39: zweiter Verteilerast
- 40: Flansch
- 41: Flansch
- 42: Schulter
- 43: Bohrung
- 44: Verteilerkanal
- 45: erster Verteilerast
- 46: zweiter Verteilerast
- 47: Bohrung
- 48: Bohrung
- 49: Nut
- 50: Nut
- 51: Bohrung
- 52: erste untere Verteilerplatte
- 53: zweite mittlere Verteilerplatte
- 54: dritte obere Verteilerplatte
- 55: Fläche
- 56: Fläche
- 57: Materialstrang
- 58: Materialstrang
- 59: Materialstrang
- 60: Materialstrang
- 61: Materialstrang
- 62: Materialstrang
- 63: Materialstrang
- 64: Materialstrang
- 65: Wand
- 66: äußere Schicht
- 67: innere Schicht
- 68: Verteilerplatten

- L: Längsachse

## Patentansprüche

1. Verfahren für die Herstellung eines schlauchförmigen Formlings aus extrudierbarem Kunststoff bei dem
mindestens zwei Materialströme von verschiedenen Extrudern jeweils mindestens einem Verteilerkanal (37, 44) in einem gemeinsamen ringförmigen Strömungsraum (6, 7) eines Extrusionskopfes zugeführt werden, wobei die Materialströme über die Verteilerkanäle (37, 44) zu einem Hohlstrang geformt werden.

2. Verfahren nach Anspruch 1,
**dadurch gekennzeichnet,**
**dass** die Materialströme aus Kunststoffen mit unterschiedlichen Eigenschaften bestehen.

3. Verfahren nach Anspruch 1 oder 2,
**dadurch gekennzeichnet,**
**dass** die Materialströme durch die Verteilerkanäle (37, 44) jeweils über einen Teil des Umfangs des Strömungsraums (6, 7) verteilt werden, um einen mit über seinem Umfang aus wechselnden Materialsträngen (57 bis 62) gebildeten Hohlstrang zu bilden.

4. Verfahren nach einem der Ansprüche 1 bis 3,
**dadurch gekennzeichnet,**
**dass** die Verteilerkanäle (37, 44) in Form von Vertiefungen in einer Außenfläche (28, 32) eines gemeinsamen Verteilerdorns (27, 31) angeordnet sind, wobei die Außenfläche (28, 32) den ringförmigen Strömungsraum (6, 7) nach innen begrenzt.

5. Verfahren nach einem der Ansprüche 1 bis 4,
**dadurch gekennzeichnet,**
**dass** mindestens zwei weitere Materialströme von verschiedenen Extrudern jeweils mindestens einem Verteilerkanal (37, 44) in einem gemeinsamen weiteren ringförmigen Strömungsraum (6, 7) des Extrusionskopfes zugeführt werden, wobei die Materialströme über die Verteilerkanäle (37, 44) zu einem weiteren Hohlstrang geformt werden.

6. Verfahren nach Anspruch 5,
**dadurch gekennzeichnet,**
**dass** die Strömungsräume (6, 7) koaxial zueinander angeordnet sind.

7. Verfahren nach Anspruch 5 oder 6,
**dadurch gekennzeichnet,**
**dass** die Hohlstränge zu einem gemeinsamen mehrschichtigen Formling zusammengeführt werden.

8. Extrusionskopf für die Herstellung eines schlauchförmigen Formlings aus extrudierbarem Kunststoff, umfassend
ein Gehäuse (5), in dem mindestens ein Strömungsraum (6, 7) zum Ausbilden eines Hohlstrangs aus extrudierbarem Kunststoff vorgesehen ist, sowie je Strömungsraum (6, 7) mindestens zwei Verteilerkanäle (37, 44), die mit unterschiedlichen Anschlusskanälen (16 bis 23) verbunden sind, wobei die Anschlusskanäle (16 bis 23) jeweils mit einem separaten Extruder verbindbar sind.

9. Extrusionskopf nach Anspruch 8,
**dadurch gekennzeichnet,**
**dass** je Strömungsraum (6, 7) ein Verteilerdorn (27, 31) vorgesehen ist, der eine Außenfläche (28, 32) aufweist, die eine innere Begrenzung des Strömungsraums (6, 7) darstellt, und
**dass** die Verteilerkanäle (37, 44) in Form von Vertiefungen in der Außenfläche (28, 32) ausgebildet sind.

10. Extrusionskopf nach Anspruch 8 oder 9,
**dadurch gekennzeichnet,**
**dass** die Verteilerkanäle (37, 44) jeweils über einen Teil des Umfangs des Strömungsraums (6, 7) verlaufen.

11. Extrusionskopf nach Anspruch 10,
**dadurch gekennzeichnet,**
**dass** über den gesamten Umfang des Strömungsraums (6, 7) Verteilerkanäle (37, 44) verlaufen.

12. Extrusionskopf nach einem der Ansprüche 8 bis 11,
**dadurch gekennzeichnet,**
**dass** jeweils zwei der Verteilerkanäle (37, 44) an ihren in Strömungsrichtung betrachteten Enden ineinander übergehen.

13. Extrusionskopf nach einem der Ansprüche 8 bis 12,
**dadurch gekennzeichnet,**
**dass** mehrere Strömungsräume (6, 7) koaxial zueinander angeordnet sind.

14. Extrusionskopf nach Anspruch 13,
**dadurch gekennzeichnet,**
**dass** die Verteilerdorne (27, 31) der Strömungsräume (6, 7) koaxial zueinander angeordnet sind.

15. Vorrichtung für die Herstellung eines schlauchförmigen Formlings aus extrudierbarem Kunststoff mit einem Extrusionskopf gemäß einem der Ansprüche 8 bis 14, wobei mit jedem Anschlusskanal ein separater Extruder verbunden ist.
